# EUROPEAN PATENT SPECIFICATION

(11) **EP 2 632 134 B1**
(45) Date of publication and mention of the grant of the patent: **27.04.2016**
(21) Application number: 12157117.8
(22) Date of filing: 27.02.2012
(51) Int. Cl.: H04M 1/725, H04M 1/57, H04M 1/663, H04M 1/22, H04M 19/04

(54) **Method and apparatus pertaining to processing incoming calls**
Verfahren und Vorrichtung in Zusammenhang mit der Verarbeitung von eingehenden Anrufen
Procédé et appareil relatifs au traitement d'appels entrants

(43) Date of publication of application: 28.08.2013
(60) Divisional application: 16155533.9
(73) Proprietor: BlackBerry Limited, Waterloo, ON N2K 0A7 (CA)
(72) Inventor: Greisson, Erik Artur, 211 40 Malmo (SE); Rydenhag, Daniel Tobias, 41459 Gothenburg (SE)
(74) Representative: Noble, Nicholas

(56) References cited:
- EP-A1- 2 120 436
- EP-A2- 2 330 808
- US-A1- 2007 036 347
- US-A1- 2008 057 926

## Description

### Field of Technology

The present disclosure relates to communication devices, including but not limited to portable communication devices having touch-sensitive displays.

### Background

Many portable communication devices are capable of receiving an incoming call. This typically includes first notifying the user of the incoming call and then accepting/completing the call if and when the user takes some corresponding acceptance action (such as pressing a corresponding real or virtual button).

Modem devices also sometimes accommodate other responses to an incoming call. Examples including muting a corresponding audio alert and "ignoring" an incoming call to thereby cause, for example, the incoming call to be promptly directed to a voice mail service.

As incoming call response options grow more varied and complex, the device's user interface is not always sufficiently clear and user friendly in these regards for all potential users. As a result, improvements in these regards are desirable.

EP2120436 discloses an incoming call answering and rejecting method, an electronic device, and a digital data storage media are provided. The method is applied to an electronic device having a touch screen and has the following steps. A request of an incoming call is received. A dragging signal is generated on the touch screen. When the dragging signal is an answering signal, the incoming call is answered. When the dragging signal is a rejecting signal, the incoming call is rejected.

EP2330808 is directed to a screen displaying method and apparatus for displaying screens in a display system. The method includes setting at least one Activation Information Region (AIR) and at least one Deactivation Information Region (DIR) to a screen of the display system, displaying items on at least one set AIR and at least one set DIR, detecting a touch gesture applied to the AIR or the DIR, executing a function corresponding to the touch gesture applied to the AIR, and altering and displaying an image of at least one item in the DIR according to the touch gesture applied to the DIR. Accordingly, items can be displayed on a screen with a high level of visibility for easy recognition.

### Brief Description of the Drawings

FIG. 1 is a block diagram in accordance with the disclosure.
FIG. 2 is a perspective view in accordance with the disclosure.
FIG. 3 is a top plan view in accordance with the disclosure.
FIG. 4 is a top plan view in accordance with the disclosure.
FIG. 5 is a top plan view in accordance with the disclosure.

### Summary

The invention is set out in the claims.

### Detailed Description

The following describes an apparatus and method pertaining to a portable communication device having a wireless transceiver, a touch-screen display, and a corresponding control circuit. The control circuit provides an incoming-call response-initiation zone on the touch-screen display in response to an incoming call. The control circuit then takes an incoming-call processing action in response to detecting a user's swipe-based gesture that begins in that incoming-call response-initiation zone.

By one approach the incoming-call response-initiation zone comprises a horizontal stripe that extends laterally at least substantially across the touch-screen display. By one approach this stripe is disposed approximately midway between opposing ends of the touch-screen display.

So configured, and by one approach, a user can begin a swipe in the incoming-call response-initiation zone that extends in a first direction that corresponds to accepting the call. By one approach, if the user begins the swipe in the incoming-call response-initiation zone but extends that swipe in a second direction (that is, for example, opposite to the first direction) a different incoming call processing action results (such as "ignoring" the incoming call).

These teachings are highly flexible in practice and will accommodate a great variety of implementation variations. These teachings will also accommodate any number of incoming-call responses and hence can serve to significantly leverage the continued value of existing practices in those regards.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

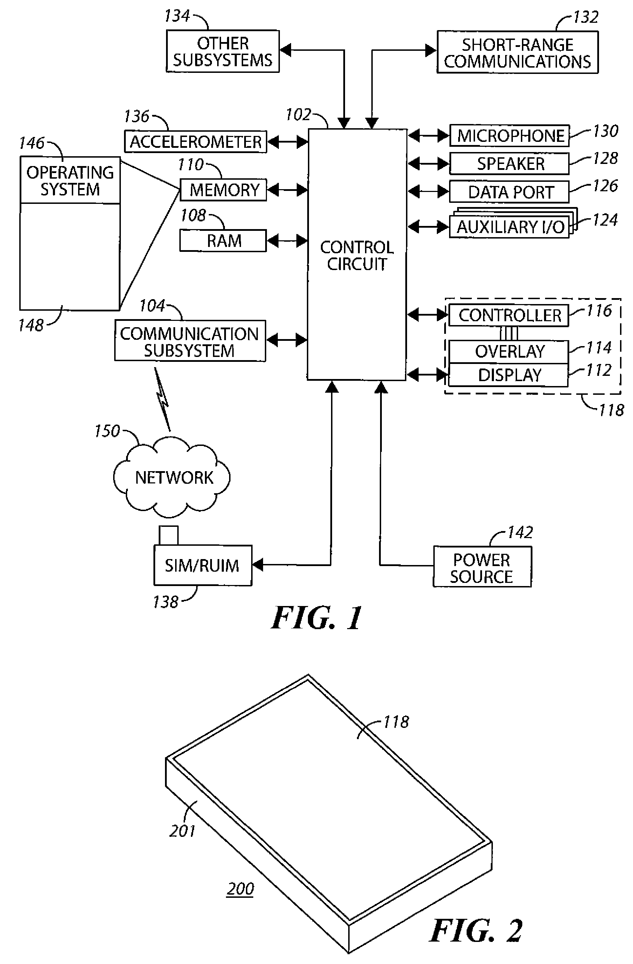

Referring to FIG. 1, an exemplary portable electronic device (such as, but not limited to, a cellular phone) includes a control circuit 102 (such as a properly programmed processor) that controls the overall operation of the portable electronic device. Communication functions, including data and voice communications, are performed through a communication subsystem 104. The communication subsystem receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device.

The control circuit 102 interacts with other elements, such as a Random Access Memory (RAM) 108, a memory 110, a display 112 with a touch-sensitive overlay 114 operably coupled to an electronic controller 116 that together comprise an optional touch-sensitive display 118 (sometimes referred to herein as a touch-screen display), an auxiliary input/output (I/O) subsystem 124 (which might comprise, for example, a physical keyboard such as a full QWERTY keyboard), a data port 126, a speaker 128, a microphone 130, a short-range communication subsystem 132 (such as, for example, a Bluetooth-based short-range communication subsystem), and other device subsystems 134 of choice.

One or more user interfaces are provided. Input via a graphical user interface is provided via the touch-sensitive overlay 114. The control circuit 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the control circuit 102.

The control circuit 102 may interact with an accelerometer 136 that may be utilized to detect direction of gravitational forces or gravity-induced reaction forces.

To identify a subscriber for network access, the portable electronic device may utilize a Subscriber Identity Module or a Removable User Identity Module (SIM/RUIM) card 138 for communication with a network, such as the wireless network 150. Alternatively, user identification information may be programmed into the memory 110.

The portable electronic device includes an operating system 146 and software programs, applications, or components 148 that are executed by the control circuit 102 and are typically stored in a persistent, updatable store such as the memory 110. Additional applications or programs may be loaded onto the portable electronic device through the wireless network 150, the auxiliary I/O subsystem 124, the data port 126, the short-range communications subsystem 132, or any other suitable subsystem 134. The memory 110 may comprise a non-transitory storage media that stores executable code that, when executed, causes the control circuit 102 to carry out one or more of the functions or actions described herein.

A received signal such as a text message, an e-mail message, or web page download is processed by the communication subsystem and input to the control circuit 102. The control circuit 102 processes the received signal for output to the display 112 and/or to the auxiliary I/O subsystem 124. A subscriber may generate data items, for example e-mail messages, that may be transmitted over the wireless network 150 through the communication subsystem. For voice communications, the overall operation of the portable electronic device is similar. The speaker 128 outputs audible information converted from electrical signals and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. One or more touches, also known as touch contacts, touch events, or sometimes gestures may be detected by the touch-sensitive display 118. The control circuit 102 may determine attributes of the touch, including a location, direction, and/or extent of a touch. Touch location data may include data for an area of contact or data for a single point of contact, such as a point at or near a center of the area of contact.

Referring to FIG. 2, for the sake of illustration but without intending any limitations in these regards, the following description will presume that the portable electronic device comprises a portable two-way wireless communications device 200 such as a so-called smartphone. Such a device 200 often comprises a housing 201 to contain the foregoing components including the touch-screen display 118.

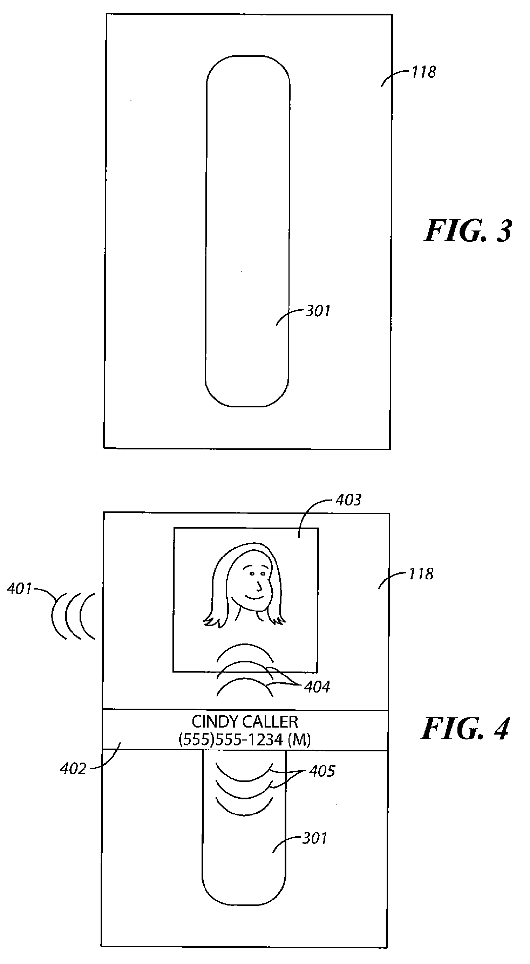

Generally speaking and referring now to FIG. 3, the aforementioned control circuit 102 can be configured (using, for example, corresponding programming as will be well understood by those skilled in the art) to provide application-specific content 301 on the touch-screen display 118. This can comprise essentially any content and essentially any application as the present teachings are relatively insensitive to any particular choices in these regards.

When, however, incoming-call signaling arrives (via, for example, the aforementioned communication subsystem 104), the control circuit 102 responds by providing an incoming-call alert (such as an audible alert 401 as shown in FIG. 4) and by providing on the touch-screen display 118 an incoming-call response-initiation zone 402. The form factor, content, and relative location of this incoming-call response-initiation zone 402 can vary as desired. As illustrated here, this incoming-call response-initiation zone 402 comprises a horizontal stripe that extends at least substantially across the touch-screen display 188. Also as illustrated herein, the incoming-call response-initiation zone 402 is disposed approximately midway between opposing ends of the touch-screen display 118.

These illustrated specifics regarding the incoming-call response-initiation zone 402 are intended to serve only an illustrative purpose and are not to taken as implying any specific limitations in these regards. In fact, any number of other form factors (such as circles, squares, triangles, or other less-regular shapes) and/or locations (such as a vertical orientation, or disposition near the top or bottom edge of the touch-screen display 118) can be used as desired.

In this illustrative example the incoming-call response-initiation zone 402 includes some textual information regarding the calling party. In particular, this includes the name of the caller ("Cindy Caller" in this example) and the caller's telephone number along with an indication ("M" in this example) that this telephone number comprises a mobile number for the caller. Such information may be gleaned, at least in part, using caller ID signaling as known in the art. This information may also rely, however, at least in part, upon information stored in a contacts list that is locally available to the control circuit 102.

Also in this illustrative example the incoming-call response-initiation zone 402 serves to divide the presentation space of the touch-screen display 118 into a lower space that continues to present the pre-call application-specific content 301 and an upper space that presents further information 403 that corresponds to the calling party. Here, that further information 403 comprises a photographic thumbnail image of the calling party that the control circuit 102 retrieves from the aforementioned contacts list. If desired, of course, the relative positioning of such content on either side of the incoming-call response-initiation zone 402 can be reversed such that the pre-call application-specific content 301 appears in the upper half of the touch-screen display 118 and the incoming-call information 403 appears in the bottom half of the touch-screen display 118.

The control circuit 102 then monitors for a user's swipe-based gesture that begins in the incoming-call response-initiation zone 402. Both the starting point of this gesture as well as the direction of the gesture have substantive meaning in this context. To convey a sense of this convention, by one approach the control circuit 102 can present one or more images on the touch-screen display 118 to suggest to the user that the user make such a swipe-based gesture.

By one approach, and as illustrated, this presentation can comprise providing shimmering waves/ripples 404 and 405 that appear to move away from the incoming-call response-initiation zone 402. In particular, one set of waves 404 moves upwardly while the other set of waves 405 moves downwardly.

By one approach these waves 404 and 405 can comprise separate and distinct graphic elements (such as arcs that are colored a specific predetermined color). By another approach these waves 404 and 405 can be formed by distorting corresponding portions of the underlying image. This distortion might comprise, for example, modifying any of a variety of presentation parameters such as, but not limited to, hue, saturation, color, resolution, focus, and so forth.

So configured, the first set of waves 403 visually suggest that swiping upwardly from the incoming-call response-initiation zone 402 selects one choice while swiping downwardly from the incoming-call response-initiation zone 402 selects a different choice.

These teachings will accommodate a variety of approaches in these regards instead of the suggested waves. For example, static or animated dots, arrows, or other pointers could serve in a similar regard as desired.

Upon swiping downwardly from the incoming-call response-initiation zone 402, the incoming-call processing action taken by the control circuit 102 is to accept the incoming call. The details regarding call acceptance are well known in the art and require no further elaboration here.

Upon swiping upwardly from the incoming-call response-initiation zone 402, the incoming-call processing action taken by the control circuit 102 in this illustrative example is to refuse the call. By one approach this can comprise "ignoring" the call as is known in the art (in which case the incoming call is typically diverted quickly and prematurely to a voice mail service for the called party) and returning the touch-screen display 118 to the pre-call application content 301 as shown in FIG. 3.

In some cases, the user may only tap (or touch) the incoming-call response-initiation zone 402. The control circuit 102 can respond by muting any further audible incoming-call alerts for this particular incoming call, but further incoming-call processing action can be delayed until the user makes a more specific indication of a desired result. This can comprise, for example, waiting for one of the aforementioned swipe-based gestures.

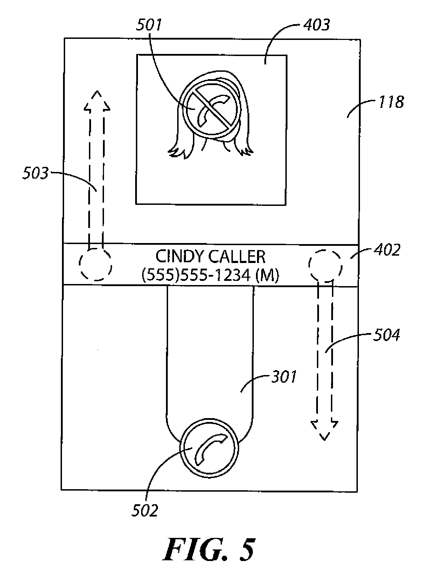

By one approach, and as suggested by the illustration shown in FIG. 5, this can comprise using icons or other imagery to prompt the user to make an appropriate swipe-based gesture. For example, one such icon 501 can comprise an icon that represents refusing the call while another such icon 502 can comprise an icon that represents accepting the call. If desired, when providing such icons 501 and 502 the control circuit 102 can visually subdue the underlying imagery (for example, by reducing the brightness or color content of the image) to emphasize the presence of the icons 501 and 502.

As before, if desired, supplemental imagery (such as the aforementioned waves) can serve to suggest making a swipe-based gesture towards one of these displayed icons 501 and 502. Such imagery might be provided immediately upon presenting such icons 501 and 502 or may only be presented if the user should first tap the incoming-call response-initiation zone 402 and then tap one of the icons 501 and 502 without making an intervening swipe-based gesture to thereby help the user understand the specific touch-based gesture that will select the desired incoming-call processing action.

By one approach, when displaying such icons 501 and 502 the swipe-based gesture must begin at the incoming-call response-initiation zone 402 and extend to or through one of the icons in order to select and effect the desired action. By another approach the swipe need not include one of the icons 501 and 502 in order to be recognized as selecting a particular incoming-call processing action. For example, as illustrated, a first swipe 503 that begins in the incoming-call response-initiation zone 402 and that extends a sufficient distance upwardly can be recognized by the control circuit 102 as selecting the incoming-call processing action of ignoring the call. Alternatively, a swipe 504 that begins in the incoming-call response-initiation zone 402 and that extends a sufficient distance downwardly can be recognized by the control circuit 102 as selecting the incoming-call processing action of accepting the call.

So configured, the control circuit 102 can readily and quickly convey (visually) to a user both a sense of the available incoming-call processing action opportunities as well as how to select from amongst these opportunities. By one approach the amount of information utilized to convey the foregoing can be increased over time in response to user actions that are insufficient in and of themselves to effect a particular choice in these regards.

These teachings are readily and economically deployed and are easily scaled to suit a wide variety of differently enabled and differently sized displays and devices.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a wireless transceiver (104);
a touch-screen display (118);
a control circuit (102) operably coupled to the touch-screen display and the wireless transceiver and configured to:
- provide on a touch-screen display an incoming-call response-initiation zone (402) in response to an incoming call in combination with a separate space that presents information corresponding to a calling party;
- in response to a user interaction with the incoming-call response-initiation zone, provide on the touch-screen display an icon (501) that represents refusing the incoming call and an icon (502) that represents accepting the incoming call;
- in response to at least one user interaction with the incoming-call response-initiation zone, visually subdue at least some imagery (403) presented on the touch-screen display in the separate space and underlying the icons;
- take an incoming-call processing action in response to detecting a user's swipe-based gesture (503, 504) that begins in the incoming-call response-initiation zone.

2. The apparatus of claim 1 wherein at least one of:
the incoming-call response-initiation zone comprises a stripe that extends at least substantially across the touch-screen display and
the stripe is disposed approximately midway between opposing ends of the touch-screen display.

3. The apparatus of claim 1 wherein the control circuit is configured to take an incoming-call processing action in response to detecting a user's swipe-based gesture that begins in the incoming-call response-initiation zone by accepting the call when the user's swipe-based gesture comprises a swipe in a first direction.

4. The apparatus of claim 3 wherein the first direction is towards a depiction of a first icon on the touch-screen display, which first icon represents accepting the call.

5. The apparatus of claim 4 wherein the control circuit is further configured to:
present at least one image via the touch-screen display to suggest making a swipe-based gesture towards the first icon upon detecting that the user taps the incoming-call response-initiation zone and then taps the first icon.

6. The apparatus of claim 4 wherein the control circuit is further configured to:
dim a presentation of other content on the touch-screen display in a vicinity of the first icon when presenting the first icon.

7. The apparatus of claim 3 wherein the control circuit is further configured to take an incoming-call processing action in response to detecting a user's swipe-based gesture that begins in the incoming-call response-initiation zone by refusing the call when the user's swipe-based gesture comprises a swipe in a second direction that is different than the first direction.

8. The apparatus of claim 7 wherein the second direction is substantially opposite the first direction.

9. The apparatus of claim 8 wherein the second direction is towards a depiction of a second icon on the touch-screen display, which second icon represents refusing the call.

10. The apparatus of claim 1 wherein the control circuit is further configured to:
mute any audible signaling as corresponds to signaling the incoming call in response to detecting a user's contacting the incoming-call response-initiation zone.

11. The apparatus of claim 10 wherein the control circuit is configured to mute any audible signaling as corresponds to signaling the incoming call in response to detecting a user's contacting the incoming-call response-initiation zone regardless of whether the user contact comprises a part of a swipe-based gesture.

12. The apparatus of claim 1 wherein the apparatus comprises a portable communications device.

13. A cellular phone, comprising the apparatus of claim 1,wherein the control circuit is configured to take an incoming-call processing action in response to detecting a user's swipe-based gesture that begins in the incoming-call response-initiation zone by accepting the call when the user's swipe-based gesture (504) comprises a swipe in a first direction.

14. A non-transitory computer storage medium (110) having instructions stored therein, which instructions, when executed by a processor (102), cause the processor to:
provide on a touch-screen display (118) an incoming-call response-initiation zone (402) in response to an incoming call in combination with a separate space that presents information corresponding to a calling party;
in response to a user interaction with the incoming-call response-initiation zone, provide on the touch-screen display an icon (501) that represents refusing the incoming call and an icon (502) that represents accepting the incoming call;
in response to at least one user interaction with the incoming-call response-initiation zone, visually subdue at least some imagery (403) presented on the touch-screen display in the separate space and underlying the icons;
take an incoming-call processing action in response to detecting a user's swipe-based gesture (503, 504) that begins in the incoming-call response-initiation zone.

15. A method comprising:
at a control circuit (102):
providing on a touch-screen display (118) an incoming-call response-initiation zone (402) in response to an incoming call in combination with a separate space that presents information corresponding to a calling party;
in response to a user interaction with the incoming-call response-initiation zone, providing on the touch-screen display an icon (501) that represents refusing the incoming call and an icon (502) that represents accepting the incoming call;
in response to at least one user interaction with the incoming-call response-initiation zone, visually subduing at least some imagery (403) presented on the touch-screen display in the separate space and underlying the icons;
taking an incoming-call processing action in response to detecting a user's swipe-based gesture (503, 504) that begins in the incoming-call response-initiation zone.

## Patentansprüche

1. Vorrichtung, aufweisend:
einen drahtlosen Transceiver (104);
eine Touchscreen-Anzeige (118);
einen Steuerkreis (102), der betriebsfähig mit der Touchscreen-Anzeige und dem drahtlosen Transceiver verbunden ist und dazu konfiguriert ist:
- Vorsehen einer Eingangsanrufreaktionsinitiationszone (402) auf einer Touchscreen-Anzeige in Reaktion auf einen eingehenden Anruf in Kombination mit einem separaten Raum, der Information darstellt, welche einem anrufenden Teilnehmer entspricht;
- in Reaktion auf eine Benutzerinteraktion mit der Eingangsanrufreaktionsinitiationszone, Vorsehen eines Symbols (501), das das Ablehnen des eingehenden Anrufs darstellt, und eines Symbols (502), das das Annehmen des eingehenden Anrufs darstellt, auf der Touchscreen-Anzeige;
- in Reaktion auf zumindest eine Benutzerinteraktion mit der Eingangsanrufreaktionsinitiationszone, visuelles Dämpfen von zumindest einigen Bildern (403), die auf der Touchscreen-Anzeige im separaten Raum dargestellt sind, und Unterlegen der Symbole;
- Durchführen eines Eingangsanrufverarbeitungsvorgangs in Reaktion auf das Erkennen einer wischenden Handbewegung (503, 504) eines Benutzers, die in der Eingangsanrufreaktionsinitiationszone beginnt.

2. Vorrichtung nach Anspruch 1, wobei zumindest eines von
der Eingangsanrufreaktionsinitiationszone einen Streifen enthält, der zumindest im Wesentlichen über die Touchscreen-Anzeige verläuft, und
der Streifen ungefähr auf halbem Wege zwischen gegenüberliegenden Enden der Touchscreen-Anzeige angeordnet ist.

3. Vorrichtung nach Anspruch 1, wobei der Steuerkreis zum Durchführen eines Eingangsanrufverarbeitungsvorgangs in Reaktion auf das Erkennen einer wischenden Handbewegung eines Benutzers, die in der Eingangsanrufreaktionsinitiationszone beginnt, durch Annehmen des Anrufs konfiguriert ist, wenn die wischende Handbewegung des Benutzers ein Wischen in eine erste Richtung beinhaltet.

4. Vorrichtung nach Anspruch 3, wobei die erste Richtung zu einer Abbildung eines ersten Symbols auf der Touchscreen-Anzeige hin verläuft, wobei das erste Symbol das Annehmen des Anrufs darstellt.

5. Vorrichtung nach Anspruch 4, wobei der Steuerkreis ferner dazu konfiguriert ist:
Darstellen von zumindest einem Bild über die Touchscreen-Anzeige zum Empfehlen des Durchführens einer wischenden Handbewegung zum ersten Symbol hin nach dem Erkennen, dass der Benutzer die Eingangsanrufreaktionsinitiationszone antippt und dann das erste Symbol antippt.

6. Vorrichtung nach Anspruch 4, wobei der Steuerkreis ferner dazu konfiguriert ist:
Dimmen einer Darstellung von anderem Inhalt auf der Touchscreen-Anzeige in einer Nähe des ersten Symbols beim Darstellen des ersten Symbols.

7. Vorrichtung nach Anspruch 3, wobei der Steuerkreis ferner zum Durchführen eines Eingangsanrufverarbeitungsvorgangs in Reaktion auf das Erkennen einer wischenden Handbewegung eines Benutzers, die in der Eingangsanrufreaktionsinitiationszone beginnt, durch Ablehnen des Anrufs konfiguriert ist, wenn die wischende Handbewegung des Benutzers ein Wischen in eine zweite Richtung beinhaltet, die von der ersten Richtung abweicht.

8. Vorrichtung nach Anspruch 7, wobei die zweite Richtung im Wesentlichen entgegengesetzt zur ersten Richtung verläuft.

9. Vorrichtung nach Anspruch 8, wobei die zweite Richtung zu einer Abbildung eines zweiten Symbols auf der Touchscreen-Anzeige hin verläuft, wobei das zweite Symbol das Ablehnen des Anrufs darstellt.

10. Vorrichtung nach Anspruch 1, wobei der Steuerkreis ferner dazu konfiguriert ist:
Stummschalten jeglicher hörbaren Signalgebung in Entsprechung zum Signalisieren des eingehenden Anrufs in Reaktion auf das Erkennen, dass ein Benutzer die Eingangsanrufreaktionsinitiationszone berührt.

11. Vorrichtung nach Anspruch 10, wobei der Steuerkreis zum Stummschalten jeglicher hörbaren Signalgebung in Entsprechung zum Signalisieren des eingehenden Anrufs in Reaktion auf das Erkennen, dass ein Benutzer die Eingangsanrufreaktionsinitiationszone berührt, konfiguriert ist, ungeachtet dessen, ob die Benutzerberührung ein Teil einer wischenden Handbewegung beinhaltet.

12. Vorrichtung nach Anspruch 1, wobei die Vorrichtung ein tragbares Kommunikationsgerät aufweist.

13. Mobiltelefon, aufweisend die Vorrichtung gemäß Anspruch 1, wobei der Steuerkreis zum Durchführen eines Eingangsanrufverarbeitungsvorgangs in Reaktion auf das Erkennen einer wischenden Handbewegung eines Benutzers, die in der Eingangsanrufreaktionsinitiationszone beginnt, durch Annehmen des Anrufs konfiguriert ist, wenn die wischende Handbewegung (504) des Benutzers ein Wischen in eine erste Richtung beinhaltet.

14. Nichtflüchtiges Rechnerspeichermedium (110) mit darin gespeicherten Befehlen, wobei die Befehle, wenn sie durch einen Prozessor (102) ausgeführt werden, den Prozessor zu Folgendem veranlassen:
Vorsehen einer Eingangsanrufreaktionsinitiationszone (402) auf einer Touchscreen-Anzeige (118) in Reaktion auf einen eingehenden Anruf in Kombination mit einem separaten Raum, der Information darstellt, welche einem anrufenden Teilnehmer entspricht;
in Reaktion auf eine Benutzerinteraktion mit der Eingangsanrufreaktionsinitiationszone, Vorsehen eines Symbols (501), das das Ablehnen des eingehenden Anrufs darstellt, und eines Symbols (502), das das Annehmen des eingehenden Anrufs darstellt, auf der Touchscreen-Anzeige;
in Reaktion auf zumindest eine Benutzerinteraktion mit der Eingangsanrufreaktionsinitiationszone, visuelles Dämpfen von zumindest einigen Bildern (403), die auf der Touchscreen-Anzeige im separaten Raum dargestellt sind, und Unterlegen der Symbole;
Durchführen eines Eingangsanrufverarbeitungsvorgangs in Reaktion auf das Erkennen einer wischenden Handbewegung (503, 504) eines Benutzers, die in der Eingangsanrufreaktionsinitiationszone beginnt.

15. Verfahren, aufweisend:
an einem Steuerkreis (102):
Vorsehen einer Eingangsanrufreaktionsinitiationszone (402) auf einer Touchscreen-Anzeige (118) in Reaktion auf einen eingehenden Anruf in Kombination mit einem separaten Raum, der Information darstellt, welche einem anrufenden Teilnehmer entspricht;
in Reaktion auf eine Benutzerinteraktion mit der Eingangsanrufreaktionsinitiationszone, Vorsehen eines Symbols (501), das das Ablehnen des eingehenden Anrufs darstellt, und eines Symbols (502), das das Annehmen des eingehenden Anrufs darstellt, auf der Touchscreen-Anzeige;
in Reaktion auf zumindest eine Benutzerinteraktion mit der Eingangsanrufreaktionsinitiationszone, visuelles Dämpfen von zumindest einigen Bildern (403), die auf der Touchscreen-Anzeige im separaten Raum dargestellt sind, und Unterlegen der Symbole;
Durchführen eines Eingangsanrufverarbeitungsvorgangs in Reaktion auf das Erkennen einer wischenden Handbewegung (503, 504) eines Benutzers, die in der Eingangsanrufreaktionsinitiationszone beginnt.

## Revendications

1. Appareil comprenant :
un émetteur-récepteur sans fil (104) ;
un dispositif d'affichage à écran tactile (118) ;
un circuit de commande (102) couplé de manière fonctionnelle au dispositif d'affichage à écran tactile et à l'émetteur-récepteur sans fil et configuré pour :
- fournir sur un dispositif d'affichage à écran tactile une zone de déclenchement de réponse à un appel entrant (402) en réponse à un appel entrant en combinaison avec un espace séparé qui présente des informations correspondant à une partie appelante ;
- en réponse à une interaction d'utilisateur avec la zone de déclenchement de réponse à un appel entrant, fournir sur le dispositif d'affichage à écran tactile une icône (501) qui représente un refus de l'appel entrant et une icône (502) qui représente une acceptation de l'appel entrant ;
- en réponse à au moins une interaction d'utilisateur avec la zone de déclenchement de réponse à un appel entrant, atténuer visuellement au moins une partie d'imagerie (403) présentée sur le dispositif d'affichage à écran tactile dans l'espace séparé et sous-jacente aux icônes ;
- prendre une action de traitement d'appel entrant en réponse à la détection d'un geste à base de glissement de l'utilisateur (503, 504) qui commence dans la zone de déclenchement de réponse à un appel entrant.

2. Appareil selon la revendication 1, dans lequel au moins un parmi :
la zone de déclenchement de réponse à un appel entrant comprend une bande qui s'étend au moins sensiblement à travers le dispositif d'affichage à écran tactile et
la bande est disposée approximativement au milieu entre des extrémités opposées du dispositif d'affichage à écran tactile.

3. Appareil selon la revendication 1, dans lequel le circuit de commande est configuré pour prendre une action de traitement d'appel entrant en réponse à la détection d'un geste à base de glissement de l'utilisateur qui commence dans la zone de déclenchement de réponse à un appel entrant par acceptation de l'appel lorsque le geste à base de glissement de l'utilisateur comprend un glissement dans une première direction.

4. Appareil selon la revendication 3, dans lequel la première direction est vers une représentation d'une première icône sur le dispositif d'affichage à écran tactile, laquelle première icône représente une acceptation de l'appel.

5. Appareil selon la revendication 4, dans lequel le circuit de commande est en outre configuré pour :
présenter au moins une image par l'intermédiaire du dispositif d'affichage à écran tactile pour suggérer la réalisation d'un geste à base de glissement vers la première icône après détection que l'utilisateur tape sur la zone de déclenchement de réponse à un appel entrant et ensuite tape sur la première icône.

6. Appareil selon la revendication 4, dans lequel le circuit de commande est en outre configuré pour :
réduire une présentation d'autre contenu sur le dispositif d'affichage à écran tactile dans un voisinage de la première icône lors de la présentation de la première icône.

7. Appareil selon la revendication 3, dans lequel le circuit de commande est en outre configuré pour prendre une action de traitement d'appel entrant en réponse à la détection d'un geste à base de glissement de l'utilisateur qui commence dans la zone de déclenchement de réponse à un appel entrant par refus de l'appel lorsque le geste à base de glissement de l'utilisateur comprend un glissement dans une seconde direction qui est différente de la première direction.

8. Appareil selon la revendication 7, dans lequel la seconde direction est sensiblement opposée à la première direction.

9. Appareil selon la revendication 8, dans lequel la seconde direction est vers une représentation d'une seconde icône sur le dispositif d'affichage à écran tactile, laquelle seconde icône représente un refus de l'appel.

10. Appareil selon la revendication 1, dans lequel le circuit de commande est en outre configuré pour :
rendre muette une quelconque signalisation audible qui correspond à une signalisation de l'appel entrant en réponse à la détection d'un contact de l'utilisateur avec la zone de déclenchement de réponse à un appel entrant.

11. Appareil selon la revendication 10, dans lequel le circuit de commande est configuré pour rendre muette une quelconque signalisation audible qui correspond à une signalisation de l'appel entrant en réponse à la détection d'un contact de l'utilisateur avec la zone de déclenchement de réponse à un appel entrant indépendamment du point de savoir si le contact d'utilisateur comprend ou non une partie d'un geste à base de glissement.

12. Appareil selon la revendication 1, dans lequel l'appareil comprend un dispositif de communication portable.

13. Téléphone cellulaire, comprenant l'appareil selon la revendication 1, dans lequel le circuit de commande est configuré pour prendre une action de traitement d'appel entrant en réponse à la détection d'un geste à base de glissement de l'utilisateur qui commence dans la zone de déclenchement de réponse à un appel entrant par acceptation de l'appel lorsque le geste à base de glissement de l'utilisateur (504) comprend un glissement dans une première direction.

14. Support de stockage informatique non transitoire (110) ayant des instructions stockées dans celui-ci, lesquelles instructions, lorsqu'elles sont exécutées par un processeur (102), amènent le processeur à :
fournir sur un dispositif d'affichage à écran tactile (118) une zone de déclenchement de réponse à un appel entrant (402) en réponse à un appel entrant en combinaison avec un espace séparé qui présente des informations correspondant à une partie appelante ;
en réponse à une interaction d'utilisateur avec la zone de déclenchement de réponse à un appel entrant, fournir sur le dispositif d'affichage à écran tactile une icône (501) qui représente un refus de l'appel entrant et une icône (502) qui représente une acceptation de l'appel entrant ;
en réponse à au moins une interaction d'utilisateur avec la zone de déclenchement de réponse à un appel entrant, atténuer visuellement au moins une partie d'imagerie (403) présentée sur le dispositif d'affichage à écran tactile dans l'espace séparé et sous-jacente aux icônes ;
prendre une action de traitement d'appel entrant en réponse à la détection d'un geste à base de glissement de l'utilisateur (503, 504) qui commence dans la zone de déclenchement de réponse à un appel entrant.

15. Procédé comprenant :
au niveau d'un circuit de commande (102) :
la fourniture sur un dispositif d'affichage à écran tactile (118) d'une zone de déclenchement de réponse à un appel entrant (402) en réponse à un appel entrant en combinaison avec un espace séparé qui présente des informations correspondant à une partie appelante ;
en réponse à une interaction d'utilisateur avec la zone de déclenchement de réponse à un appel entrant, la fourniture sur le dispositif d'affichage à écran tactile d'une icône (501) qui représente un refus de l'appel entrant et d'une icône (502) qui représente une acceptation de l'appel entrant ;
en réponse à au moins une interaction d'utilisateur avec la zone de déclenchement de réponse à un appel entrant, l'atténuation visuelle d'au moins une partie d'imagerie (403) présentée sur le dispositif d'affichage à écran tactile dans l'espace séparé et sous-jacente aux icônes ;
la prise d'une action de traitement d'appel entrant en réponse à la détection d'un geste à base de glissement de l'utilisateur (503, 504) qui commence dans la zone de déclenchement de réponse à un appel entrant.
